# EUROPEAN PATENT APPLICATION

(11) **EP 4 847 146 A1**
(43) Date of publication of application: **02.12.2026**
(21) Application number: 25851512.1
(22) Date of filing: 05.08.2025
(51) Int. Cl.: B05C 5/00, B05C 11/00, B05C 11/10

(54) **LIQUID MATERIAL DISCHARGE DEVICE AND COATING DEVICE**

(30) Priority: 05.08.2024 JP 2024129019
(71) Applicant: Musashi Engineering, Inc., Mitaka-shi, Tokyo 181-0011 (JP)
(72) Inventor: IKUSHIMA, Kazumasa, Mitaka-shi, Tokyo 181-0011 (JP)
(74) Representative: TBK
(86) International application number: PCT/JP2025/027646
(87) International publication number: WO 2026/034473

(57) **Abstract**

Problem:

To provide a liquid material discharge device which can be mounted not only on a specific robot but also on various robots and an application apparatus on which the device is mounted, while maintaining good responsiveness at the time of switching pressure to be applied to a liquid material and good workability for replacement of a reservoir container.

Solution:

There is provided a liquid material discharge device 1 including: a main device 10; a switching device 20 configured to be physically separate from the main device 10 and to supply air into a reservoir container that communicates with a nozzle; and a buffer device 22, in which the main device 10 includes a pressurized air regulating device 12 configured to adjust pressurized air to a desired pressure, and a control device 11, the switching device 20 includes a discharge valve 21 configured to switch between allowing and blocking communication through a flow path connecting the pressurized air regulating device 12 to the reservoir container 50, the main device 10 is connected to the switching device 20 by a flexible air supply path 32 so that a relative position thereof can be changed, and the buffer device 22 is arranged in the switching device 20 or arranged such that it is coupled to the switching device. There is also provided an application apparatus 40 with the same device as above mounted thereon.

## Description

### Technical Field

The present invention relates to a liquid material discharge device that discharges a liquid material by supplying pressurized air to a reservoir container communicating with a nozzle, and to an application apparatus including the device.

### Background Art

There exists an apparatus called air dispenser, which discharges a liquid material in a reservoir container by supplying pressurized gas to the reservoir container communicating with a nozzle.

Patent Document 1 discloses an air dispenser equipped with a pressure reducing valve, a buffer tank, and a discharge valve. By providing the buffer tank, it is possible to prevent a sudden pressure drop in a tube line when operating the discharge valve and to obtain pressure for achieving a desired discharge amount in a short time by causing the pressure within the reservoir container to rise sharply. In addition, it has been proposed with the apparatus in the Patent Document 1 to mitigate a pressure drop in a flow path for supplying compressed gas to the liquid reservoir container, which would occur when actuating the pressure reducing valve, by making a flow resistance of the flow path through which the buffer tank communicates with the reservoir container greater than a flow resistance of the flow path through which the buffer tank communicates with the pressure reducing valve.

In some cases, the air dispenser is mounted on a robot that moves a nozzle and an application target relative to each other and is used to perform desired application to the application target. Patent Document 2 discloses a liquid material application apparatus that includes a desktop robot on which a dispenser such as an air-type one is mounted. In such a liquid material application apparatus, a reservoir container communicating with a nozzle is mounted on a holder installed such that it moves vertically with respect to a head, and a dispensing controller is installed at a position away from the movable head. When mounted on a large robot, the distance between the movable head and the dispensing controller will sometimes be 5 to 10 meters.

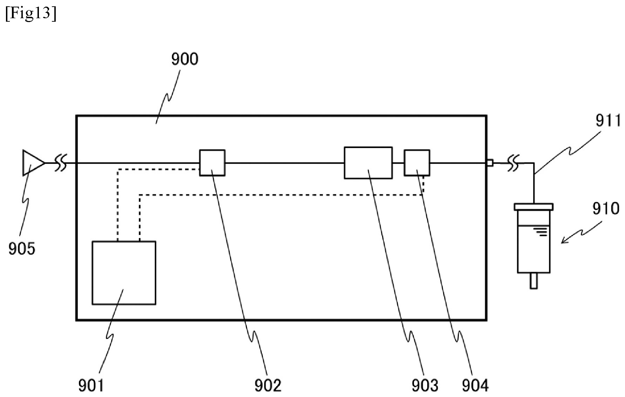

Fig. 13 is a block diagram for describing a conventional dispensing controller 900. The dispensing controller 900 includes a control device 901, a pressure regulator 902, a buffer tank 903, and a discharge valve 904, and is connected to a reservoir container 910 having a discharge port via an adapter tube 911. The pressurized air supplied from an air supply source 905 is regulated by the pressure regulator 902 and is supplied to the discharge valve 904 via the buffer tank 903. The discharge valve 904 controls a liquid material discharge operation by switching between allowing communication between the adapter tube 911 and the buffer tank 903 and blocking the communication in response to a signal from the control device 901.

### Prior Art List

### Patent Document

Patent Document 1: Japanese Patent Laid-Open Publication No. 2010-279867
Patent Document 2: International Publication No. 2015/083722 pamphlet

### Summary of the Invention

### Problems to be Solved by the Invention

In conventional liquid material application apparatuses, the dispensing controller is installed at a location away from the reservoir container that communicates with the nozzle. Here, when the dispensing controller is located away from the reservoir container, an issue occurs in which responsiveness at the times of starting and ending discharge degrades. For example, at the time of starting discharge, even when the switching valve allows communication between the reservoir container and the pressure regulator, the distance between the switching valve and the reservoir container causes an issue in that it takes time for the pressure within the reservoir container to reach a desired value. Moreover, when reducing the pressure within the reservoir container at the time of ending discharge, it takes time to exhaust the air from the reservoir container through the switching valve, resulting in an issue in that the discharge of liquid material from the discharge port does not stop quickly.

On the other hand, adding a heavy load to a holder that holds the reservoir container would increase the inertial force when moving the holder, resulting in degradation of responsiveness of movement and stopping of the holder. In order to suppress such inertial force, it would be necessary to adopt a large-sized driving device which moves the holder. This means that there is a constraint that a heavy load cannot be added to the holder holding the reservoir container. In addition, even when the holder is not configured to move, no large object like the dispensing controller can be arranged near the holder in some cases. Furthermore, since the reservoir container needs to be replaced when a remaining amount of the liquid material decreases, it is also important not to impair workability during replacement.

The present invention aims to provide a liquid material discharge device which can be mounted not only on a specific robot but also on various robots and an application apparatus on which the device is mounted, while maintaining good responsiveness at the times of starting and ending discharge and good workability for replacement of the reservoir container.

### Means for Solving the Problems

The liquid material discharge device according to the present invention is configured with the following technical means.
[1] A liquid material discharge device including: a main device connected to an air supply source; a switching device configured to be physically separate from the main device and to supply air into a reservoir container that communicates with a nozzle; and a buffer device, in which the main device includes a pressurized air regulating device configured to adjust pressurized air supplied from the air supply source to a desired pressure, and a control device, the switching device includes a discharge valve configured to switch between allowing and blocking communication through a flow path connecting the pressurized air regulating device to the reservoir container, the main device is connected to the switching device by an at least partially flexible air supply path so that a relative position of the main device and the switching device can be changed, and the buffer device is arranged in the switching device or arranged such that the buffer device is coupled directly or indirectly to the switching device.
[2] The liquid material discharge device according to [1], in which a total length of a flow path connecting the discharge valve to the buffer device is equal to or smaller than 50 centimeters.
[3] The liquid material discharge device according to [1] or [2], further including a coupling tool or an attachment for attaching the switching device to a robot configured to move the reservoir container relative to a workpiece.
[4] The liquid material discharge device according to any one of [1] to [3], in which the switching device includes a case that accommodates the discharge valve, and the buffer device includes a container disposed inside the case of the switching device.
[5] The liquid material discharge device according to any one of [1] to [4], in which the switching device includes a case that accommodates the discharge valve, and the buffer device includes a container disposed outside the case of the switching device.
[6] The liquid material discharge device according to [5], including a coupling tool or an attachment for attaching the buffer device to the case.
[7] The liquid material discharge device according to any one of [1] to [6], in which the switching device includes an output joint fluidly connected to the discharge valve, the output joint being configured to be coupled to an air supply tube to which the reservoir container is coupled.
[8] The liquid material discharge device according to any one of [1] to [7], in which the pressurized air regulating device includes a pressure regulator.
[9] The liquid material discharge device according to any one of [1] to [8], in which the discharge valve includes at least one pilot-type valve.
[10] The liquid material discharge device according to [9], in which the main device includes a pilot air regulating device configured to supply pilot pressure to the pilot-type valve.
[11] The liquid material discharge device according to [10], in which the pilot air regulating device includes a pressure regulator.
[12] The liquid material discharge device according to any one of [1] to [11], in which the discharge valve is constituted by a multi-way valve.
[13] The liquid material discharge device according to any one of [1] to [12], in which the discharge valve is constituted by a plurality of solenoid valves.
[14] The liquid material discharge device according to any one of [1] to [13], including a pressure sensor disposed in a flow path that connects the reservoir container to the discharge valve, in which the control device is configured to control the discharge valve based on a measurement value of the pressure sensor.
[15] The liquid material discharge device according to any one of [1] to [14], in which the discharge valve is configured to switch between allowing communication between the pressurized air regulating device and the reservoir container and allowing communication between atmosphere and the reservoir container.
[16] The liquid material discharge device according to any one of [1] to [15], in which the main device includes a negative-pressure air supply device configured to supply negative pressure, the negative-pressure air supply device is connected to the discharge valve by an at least partially flexible negative-pressure air supply path, and the discharge valve is configured to switch between allowing communication between the pressurized air regulating device and the reservoir container and allowing communication between the negative-pressure air supply device and the reservoir container.
[17] The liquid material discharge device according to [16], in which the negative-pressure air supply device includes an ejector.
[18] The liquid material discharge device according to [17], in which the negative-pressure air supply device includes a pressure regulator disposed between the ejector and the air supply source.
[19] An application apparatus including: the liquid material discharge device according to any one of [1] to [18]; a robot that has a holder to hold the reservoir container and is configured to move the holder and an application target relative to each other; and a flexible air supply tube that connects the liquid material discharge device to the reservoir container.
[20] The application apparatus according to [19], further including a coupling tool or an attachment for attaching the switching device to the robot.
[21] The application apparatus according to [20], in which the coupling tool or the attachment is a coupling tool or an attachment for attaching the switching device to a movable head that has the holder.
[22] The application apparatus according to [20] or [21], in which the robot includes a beam member on which a movable head that has the holder is mounted, and the coupling tool or the attachment is a coupling tool or an attachment for attaching the switching device to the beam member.

### Advantageous Effect of the Invention

According to the present invention, it will be possible to provide a liquid material discharge device which can be mounted not only on a specific robot but also on various robots and an application apparatus on which the device is mounted, while maintaining good responsiveness at the times of starting and ending discharge and good workability for replacement of the reservoir container.

### Brief Description of the Drawings

[Fig. 1] Fig. 1 is a block diagram of a liquid material discharge device of a first embodiment example.
[Fig. 2] Fig. 2 is a perspective view illustrating a state in which a reservoir container and an adapter tube are attached to the liquid material discharge device of the first embodiment example.
[Fig. 3] Fig. 3 is a partial cross-sectional side view for describing a configuration of the reservoir container and an air supply path.
[Fig. 4] Fig. 4 is a perspective view illustrating an application apparatus on which the liquid material discharge device of the first embodiment example is mounted.
[Fig. 5] Fig. 5 is a block diagram of a liquid material discharge device of a second embodiment example.
[Fig. 6] Fig. 6 is a perspective view illustrating the liquid material discharge device of the second embodiment example.
[Fig. 7] Fig. 7 is a perspective view illustrating an application apparatus on which the liquid material discharge device of the second embodiment example is mounted.
[Fig. 8] Fig. 8 is a block diagram of a liquid material discharge device of a third embodiment example.
[Fig. 9] Fig. 9 is a perspective view illustrating the liquid material discharge device of the third embodiment example.
[Fig. 10] Fig. 10 is a block diagram of a liquid material discharge device of a fourth embodiment example.
[Fig. 11] Fig. 11 is a perspective view illustrating the liquid material discharge device of the fourth embodiment example.
[Fig. 12] Fig. 12 is a perspective view illustrating an application apparatus on which a liquid material discharge device of a fifth embodiment example is mounted.
[Fig. 13] Fig. 13 is a block diagram of a conventional liquid material discharge device.

### Mode for Carrying out the Invention

Hereinafter, embodiment examples of the present invention will be described with reference to the drawings.

### <<First Embodiment Example>>

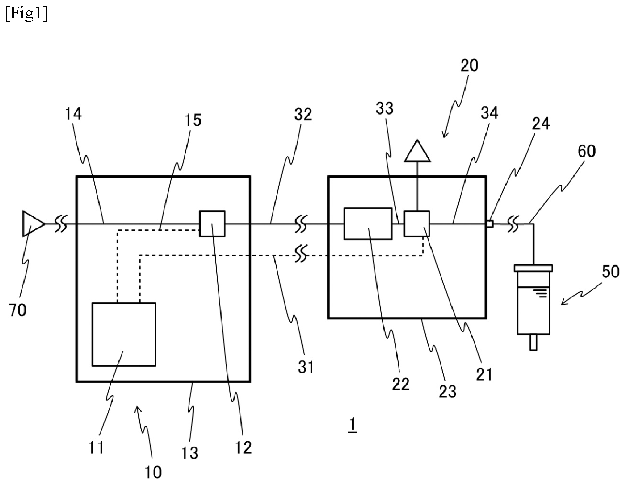

As illustrated in Fig. 1, a liquid material discharge device 1 of a first embodiment example includes a main device 10 and a switching device 20.

The main device 10 includes a control device 11, a pressurized air regulating device 12, and a case 13. The control device 11 includes a processing device (not shown) and a storage device (not shown) that stores control programs. The control device 11 is connected to the pressurized air regulating device 12 by a signal cable 15 and to a discharge valve 21 by a flexible signal cable 31, and controls operation of these components. It should be noted that, as described in a third embodiment example below, a configuration may be adopted in which a second control device capable of wireless communication with the control device 11 is provided in the switching device 20, and operation of the discharge valve 21 is controlled by the second control device. In addition, each of signal cables within the main device 10 and the switching device 20 may not necessarily be in the form of a cable as long as it can communicate signals. For example, it may be configured as a conductive wire formed on a substrate, configured as contact points that are in direct contact, or configured wirelessly.

The pressurized air regulating device 12 is connected on the upstream side to an air supply source 70 via a first air supply path 14, and on the downstream side to a buffer device 22 of the switching device 20 via a second air supply path 32. The first air supply path 14 may be configured as a flexible pipe or a non-flexible pipe, or may be configured as a flow path formed within a block. The second air supply path 32 is constituted by a flexible pipe, for example. The pressurized air regulating device 12 is equipped with a pressure regulator, and reduces the pressure value of high-pressure air supplied from the air supply source 70 to a set value, and supplies it to the second air supply path 32. The air supply source 70 may, for example, utilize a known air compressor.

It should be noted that the main device 10 and the air supply source 70 are detachably connected to each other by detachably coupling the first air supply path 14 of the main device 10 to the air supply source 70 via a connecting tool that is not illustrated.

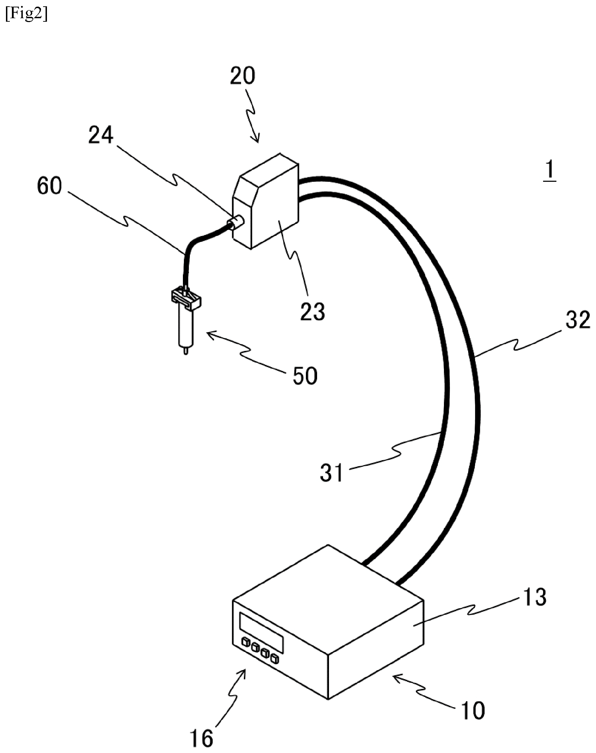

As illustrated in Fig. 2, an operation unit constituted by a touch panel, operation buttons, and the like for setting discharge operations and discharge conditions is disposed on a front side of the case 13. An input/output port (not shown in Fig. 2) for electrical connection to external equipment and an input/output port (not shown in Fig. 2) for connection to an air pipe are disposed on the front side or a rear side of the case 13. It should be noted that the operation unit may be physically separate from the main device 10 and configured to give instructions by wire or wirelessly.

The switching device 20 includes the discharge valve 21, the buffer device 22, and a case 23. The discharge valve 21 is connected on the upstream side to the buffer device 22 by a third air supply path 33, and on the downstream side to an output joint 24 by a fourth air supply path 34. The third air supply path 33 and the fourth air supply path 34 may be configured as flexible pipes or non-flexible pipes, or may be configured as flow paths formed within a block.

The discharge valve 21 of the present embodiment example is a switching valve (three-way valve) that is accommodated in the case 23 and can be at a first position where a reservoir container 50 communicates with the buffer device 22 or a second position where the reservoir container 50 communicates with the atmosphere. It should be noted that, instead of configuring the discharge valve of the switching device 20 as a multi-way valve such as the three-way valve with a function of an exhaust valve, it may be configured by combining multiple solenoid valves such as on-off valves or switching valves, and such a valve device may also be included as the discharge valve of the present invention.

The buffer device 22 is constituted by a tank having a shape such as spherical, cylindrical, tubular, or coiled shape, for example, and is accommodated in the case 23. The buffer device 22 may be configured by combining multiple containers. The total capacity of the containers included in the buffer device 22 is, for example, 0.7 to 25 times or 1 to 10 times the capacity of the reservoir container 50. By installing the buffer device 22 at the flow path through which the reservoir container 50 communicates with the pressurized air regulating device 12, it is possible to prevent a sudden pressure drop in the flow path, which would occur when switching the discharge valve 21, and to obtain pressure for achieving a desired discharge amount in a short time by causing the pressure within the reservoir container to rise sharply.

On the other hand, a large distance between the buffer device 22 and the reservoir container 50 may, in some cases, result in a delay in the effect of suppressing pressure reduction by the buffer device 22. In order to enable raising the pressure within the reservoir container 50 quickly in a desired way at the start of discharge, the distance between an adapter 61 attached to an upper end of the reservoir container 50 and an outlet port of the buffer device 22 is configured to be, for example, 200 centimeters or less (preferably, 150 centimeters or less, or more preferably 120 centimeters or less).

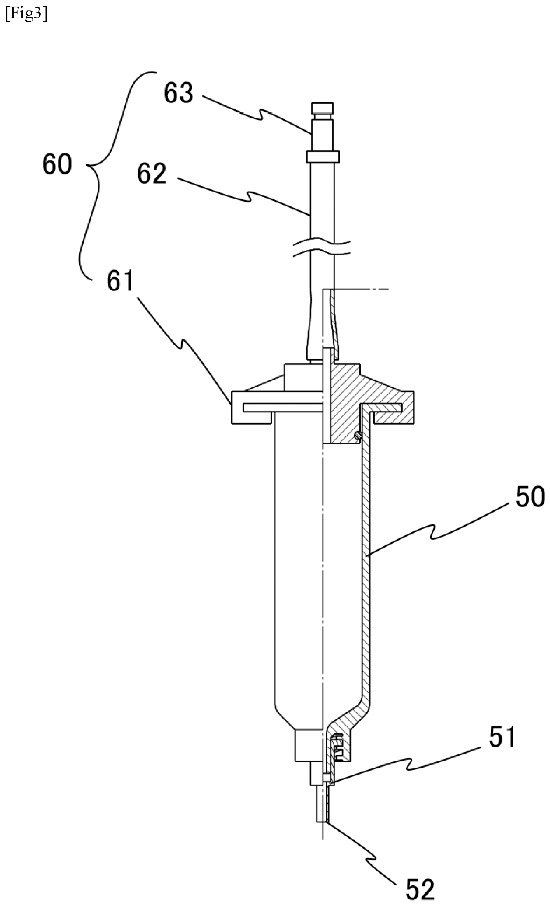

As illustrated in Fig. 2, the switching device 20 communicates with the reservoir container 50 via an adapter tube 60 connected to the output joint 24. Fig. 3 is a partial cross-sectional side view for describing a configuration of the reservoir container 50 and the adapter tube 60. The adapter tube 60 is constituted by the adapter 61 attached to the upper end of reservoir container 50, an air supply path 62, and a joint coupling tool 63. The adapter 61 is detachably attached to a pair of flanges provided at the upper end of the reservoir container 50, thereby creating a closed space inside the reservoir container 50. The air supply path 62, which is connected to the adapter 61, is a flexible tube, and supplies pressure-regulated pressurized air via the switching device 20 into the reservoir container 50. The joint coupling tool 63 allows the air supply path 62 to be detachably coupled to the output joint 24.

Since the reservoir container 50 is replaced when the remaining amount of the liquid material falls below a certain level, from a viewpoint of ease of replacement work, it is desirable to arrange the reservoir container 50 and the switching device 20 at a certain distance apart from each other (e.g., 10 centimeters or more, preferably 20 centimeters or more, or more preferably 30 centimeters or more). Accordingly, the length of the air supply path 62 should be a certain value or more (e.g., 10 centimeters or more, preferably 20 centimeters or more, or more preferably 30 centimeters or more). The length of the air supply path 62 of the adapter tube 60 is selected from various lengths depending on the environment in which it is used and a robot used with it. In light of these considerations, it is preferable to configure the distance between the output joint 24 and the outlet port of the buffer device 22 to be short, as this allows for a wider range of tolerance with respect to the length of the air supply path 62 of the adapter tube 60.

The reservoir container 50 is a known reservoir container, and has an inner cylinder with a lower opening at its bottom end and an outer cylinder surrounding the inner cylinder. A nozzle 51, having a discharge port 52 at its tip, is attached to the inner cylinder of the reservoir container 50. It is possible to discharge a liquid material in the reservoir container 50 from the discharge port 52 by supplying pressurized air from the adapter tube 60 into the reservoir container 50. The reservoir container 50 is moved relative to a workpiece W, and performs application to the workpiece W in accordance with an application pattern stored in the control device 11 or a robot controller (not shown). At the time of ending the application work, the ejection of the liquid material from the discharge port 52 is stopped by stopping supply of the pressurized air into the reservoir container 50 and exhausting the pressurized air in the reservoir container.

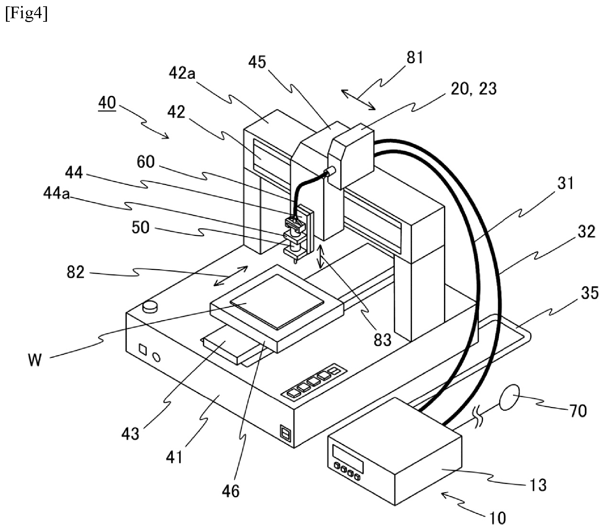

A usage example of the liquid material discharge device 1 of the first embodiment example will be described. The liquid material discharge device 1 of the present embodiment example is mounted on various robots for use as an application apparatus. A robot to which the present invention is applicable at least includes: a head that holds a reservoir container communicating with a nozzle; a relative driving device for moving a workpiece and the nozzle relative to each other; and a robot controller for controlling operation of the relative driving device. Fig. 4 is a perspective view illustrating, as an example, an application apparatus 40 on which the liquid material discharge device 1 of the first embodiment example is mounted. The application apparatus 40 is a desktop robot apparatus that mainly includes a base 41, a relative driving device (42 to 44), and a movable head 45.

The relative driving device is constituted by an X-direction driving device 42, a Y-direction driving device 43, and a Z-direction driving device 44. The X-direction driving device 42 has a beam member 42a supported by two supporting poles, and can move the movable head 45 forward and backward in the X-direction 81. The movable head 45 attached to the beam member 42a has a front lower surface to which the Z-direction driving device 44 having a holder is attached, and a side surface to which the switching device 20 is attached.

The case 23 of the present embodiment example is attached to the movable head 45 by a coupling tool such as a screw, or an attachment (an attachment tool). In some cases, various types of equipment such as a distance sensor and a camera may be disposed on the movable head 45 in the vicinity of the reservoir container 50. As the switching device 20 is attached to an upper part of the movable head 45 and the Z-direction driving device 44 that holds the reservoir container 50 is attached to a lower part of the movable head 45, space is secured in the vicinity of the reservoir container 50 for additionally installing various types of equipment.

The Z-direction driving device 44 can move the reservoir container 50 attached to the holder 44a forward and backward in the Z-direction (vertical direction) 83. The Z-direction driving device 44 only needs to move the reservoir container 50 and does not need to move the switching device 20. Hence, it does not require a large driving force and can be made compact.

The Y-direction driving device 43 disposed on the base 41 can move a worktable 46 forward and backward in the Y-direction 82, which is perpendicular to the X-direction 81. The worktable 46 is constituted by a plate-shaped member and includes a mechanism (not shown) for fixing the workpiece W. The X-, Y- and Z-direction driving devices 42 to 44 can be configured using, for example, a combination of an electric motor (a servomotor, a stepping motor, or the like) and a ball screw, a linear motor, or the like.

The switching device 20 is detachably attached to an upper side surface of the movable head 45 and is moved together with the movable head 45. Since the signal cable 31 and the second air supply path 32 that connect the switching device 20 to the main device 10 are flexible and have sufficient lengths to follow the movement of the movable head 45, the movement of the switching device 20 is not restricted by the signal cable 31 or the second air supply path 32. The lengths of the signal cable 31 and the second air supply path 32 are 0.85 to 100 times the length of the adapter tube 60 and, for example, they may be 0.85 meters to 10 meters or preferably 1.2 meters to 10 meters. It should be noted that the signal cable 31 and the second air supply path 32 may be bundled together with a fastener band or the like as long as this does not restrict the movement of the movable head 45.

The switching device 20 is physically separate from the main device 10, which offers a high degree of freedom in terms of installation position, and it can be mounted on any type of robot. It should be noted that the position at which the switching device 20 is attached to the movable head 45 is not limited to the side surface as illustrated, and it may be attached to a top surface or another side surface of the movable head 45. Moreover, provided that it does not interfere with the application work, the switching device 20 may be arranged as appropriate at a place other than the movable head, such as on the beam member 42a or on a supporting pole that supports the beam member 42a.

The main device 10 is connected to a robot controller (not shown) inside the base 41 via a signal cable 35. The robot controller controls operation of the relative driving device (42 to 44), and transmits start discharge commands and stop discharge commands to the control device 11 of the main device 10. The control device 11 may have a function to automatically compute a pressure value of the pressurized air to be applied to the reservoir container 50 and an application duration of the pressurized air based on a movement speed of the movable head 45 received from the robot controller via the signal cable 35. When the pressure value and the application duration of the pressurized air have been transmitted from the main device 10 to the switching device 20, the pressurized air of which pressure has been regulated by the pressurized air regulating device 12 is supplied to the reservoir container 50 through the adapter tube 60 at a certain timing.

In the application apparatus 40 of the first embodiment example described above, the distance between the output joint 24 and the outlet port of the buffer device 22 is small and thus the distance between the upper end of the reservoir container 50 and the outlet port of the buffer device 22 is small (e.g., 200 centimeters or less), which allows for enhancement of responsiveness of air pressure control at the times of starting and ending discharge.

Furthermore, because the reservoir container 50 and the switching device 20 are spaced apart by a certain distance (i.e., they are not too close) and are connected by the flexible adapter tube 60, the reservoir container 50 can be easily replaced, and the risk of the liquid material adhering to the switching device 20 during the replacement can be reduced.

### <<Second Embodiment Example>>

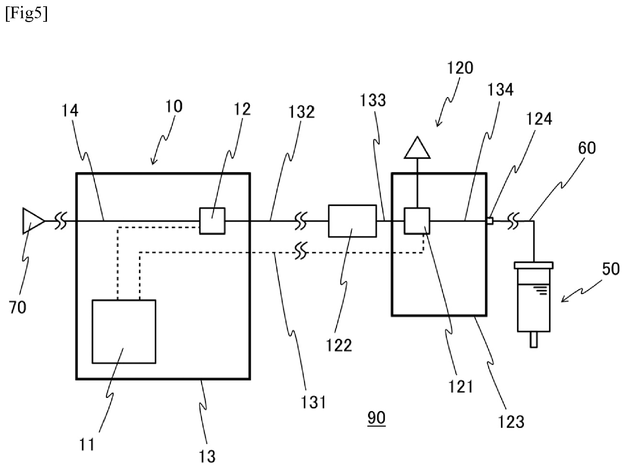

A liquid material discharge device 90 of a second embodiment example illustrated in Fig. 5 differs from the liquid material discharge device 1 of the first embodiment example in that a buffer device 122 is not accommodated in a case 123. The following description focuses on the differences from the first embodiment example, and elements in common with the first embodiment example are given the same reference symbols, and their descriptions are omitted.

As illustrated in Fig. 5, the liquid material discharge device 90 of the second embodiment example includes the buffer device 122 disposed outside the case 123 of a switching device 120. As the second embodiment example adopts a structure in which the buffer device 122 is disposed outside the case 123, the capacity of the buffer device 122 is not restricted by the capacity of the case 123.

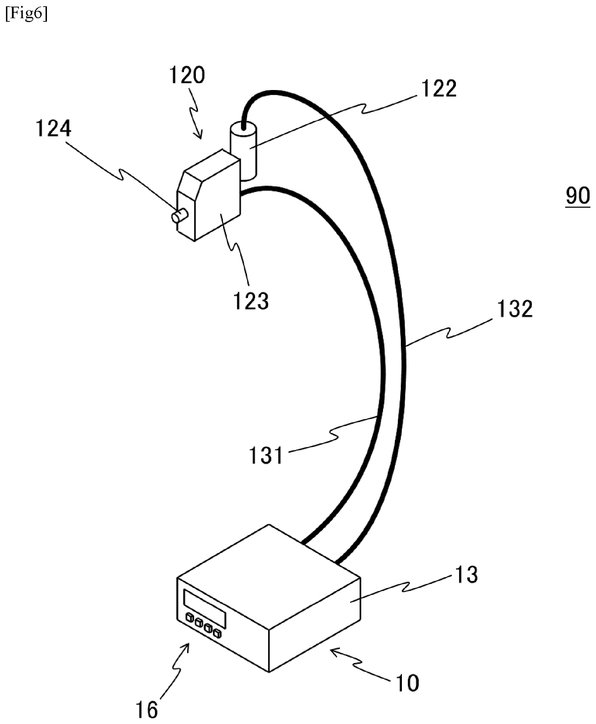

Although the buffer device 122 and the case 123 are depicted separately in Fig. 5, the buffer device 122 is actually attached to the case 123 (see Fig. 6) by a coupling tool such as a screw or another attachment (attachment tool), which is not illustrated.

An input port of the buffer device 122 is connected to the pressurized air regulating device 12 via a second air supply path 132, and an output port is connected to a discharge valve 121 via a third air supply path 133. The total length of the third air supply path 133 is 50 centimeters or less, preferably 40 centimeters or less, or more preferably 30 centimeters or less. The discharge valve 121 of the present embodiment example is a switching valve (three-way valve) that is accommodated in the case 123 and can be at a first position where the reservoir container 50 communicates with the buffer device 122 or a second position where the reservoir container 50 communicates with the atmosphere.

Fig. 6 is a perspective view illustrating the liquid material discharge device 90 of the second embodiment example. The main device 10 is the same as that of the first embodiment example. The switching device 120 has an output joint 124 disposed at a lower part of a front side surface of the case 123, and the buffer device 122 is attached to an upper part of a rear side surface of the case 123. A flexible signal cable 131 is connected to a lower part of the rear side surface of the case 123. The flexible second air supply path 132 is connected to a top surface of the buffer device 122. It should be noted that the air supply path provided inside the switching device 120 may be configured as a flexible pipe or a non-flexible pipe, or may be configured as a flow path formed within a block.

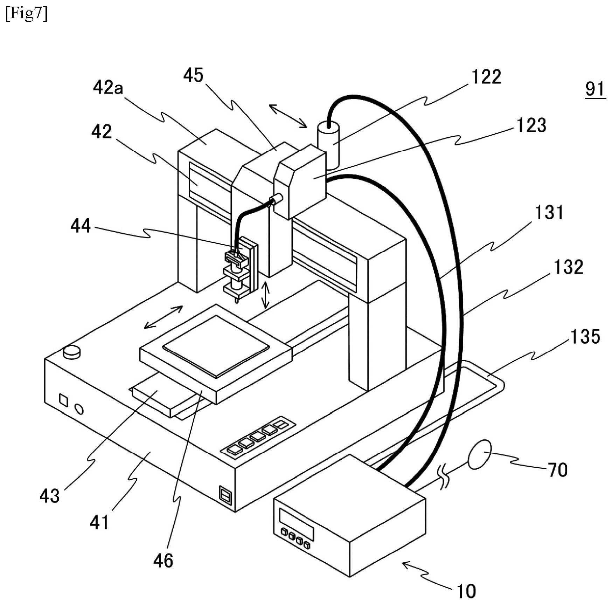

Fig. 7 is a perspective view illustrating an application apparatus 91 on which the liquid material discharge device 90 of the second embodiment example is mounted. As illustrated in Fig. 7, the case 123 of the switching device 120 is attached to a side surface of the movable head 45, however, as with the first embodiment example, the position at which it is attached is not limited to the position as illustrated.

In Fig. 7, the buffer device 122 is attached to the rear side surface of the case 123, however, the position at which it is attached is not limited to the side surface as illustrated, and it may be attached to a top surface or another side surface of the case 123. In addition, although Fig. 7 illustrates the buffer device 122 constituted by a cylindrical tank, the shape of the buffer device 122 is not limited to this, and the tank may be spherical, cylindrical, tubular, or coiled, for example. The buffer device 122 may be directly coupled to the case 123 with a coupling tool such as a screw, or it may be indirectly coupled via an attachment (attachment tool) that holds the buffer device 122. Alternatively, a rigid joint that constitutes a part or the entirety of the third air supply path 133 may be extended from the case 123, and the buffer device 122 may be coupled and attached to this joint.

The application apparatus 91 of the second embodiment example described above also has good responsiveness of air pressure control at the times of starting and ending discharge as the distance between the reservoir container 50 and the buffer device 122 is small.

In addition, as the size of the buffer device 122 is not restricted by the size of the case 123, the buffer device 122 can have larger capacity than in the first embodiment example.

Moreover, when the buffer device 122 is constituted by a plurality of tanks, the capacity of the buffer device 122 can easily be extended by coupling tanks outside the case 123. In this case, some of the tanks may be arranged inside the case 123, and the rest of the tanks may be arranged outside the case 123.

It should be noted that, when the buffer device 122 is formed by a plurality of tanks and if some of the tanks are arranged inside the case 123 or are arranged such that they are coupled directly or indirectly to the case 123, some other tanks may be arranged at a position away from the case 123, such as inside the main device 10, for example.

### <<Third Embodiment Example>>

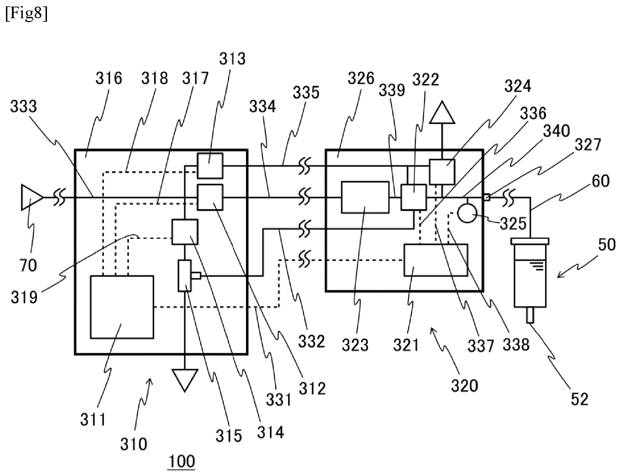

A liquid material discharge device 100 of a third embodiment example illustrated in Fig. 8 includes a main device 310 and a switching device 320. The liquid material discharge device 100 of the present embodiment example is also mounted on various robots for use as an application apparatus. As an example, the liquid material discharge device 100 is mounted on a desktop robot that mainly includes the base 41, the relative driving device (42 to 44), and the movable head 45 for use as an application apparatus (see Fig. 4).

The main device 310 includes a first control device 311, a first pressurized air regulating device 312, a pilot air regulating device 313, a second pressurized air regulating device 314, an ejector 315, and a case 316. The first control device 311 includes a processing device (not shown) and a storage device (not shown) that stores primary control programs. The first control device 311 is connected via signal cables 317 to 319 to the first pressurized air regulating device 312, the pilot air regulating device 313, and the second pressurized air regulating device 314, and controls operation of these components. In addition, the first control device 311 is configured to be capable of communicating with a second control device 321 via a signal cable 331. It should be noted that each of the first control device 311 and the second control device 321 may be provided with a wireless communication module to adopt a configuration in which they perform wireless communication without the signal cable 331.

The first pressurized air regulating device 312 is equipped with a pressure regulator, and reduces the pressure value of high-pressure air supplied from the air supply source 70 via a first air supply path 333 to a set value, and supplies it to a second air supply path 334.

The pilot air regulating device 313 is connected to the air supply source 70, and is a pressure regulating device that supplies pilot pressure to a pilot pipe 335 to control operation of a switching valve 322 and an exhaust valve 324, which will be described below. Both of the switching valve 322 and the exhaust valve 324 described below utilize pilot-type solenoid valves, and the valves of the switching valve 322 and the exhaust valve 324 are opened and closed using the force of the air supplied from the pilot air regulating device 313.

It should be noted that, if the pilot pressure required by the pilot-type solenoid valves is the same level as the pressure of the air supply source 70, the pilot air regulating device 313 may not be provided, and the pilot pressure is supplied to the pilot-type solenoid valves by having the pilot pipe 335 branch off from the first air supply path 333.

Further, as a configuration that does not include the pilot air regulating device 313, instead of having the pilot pipe 335 branch off from the first air supply path 333, the pilot pipe 335 may be configured to branch off from the second air supply path 334, a buffer device 323, an air supply path 339, and the like, which are located downstream of the first pressurized air regulating device 312. In this case, if the pilot pipe 335 is configured to branch within the switching device 320, the pilot pipe 335 between the main device 310 and the switching device 320 is no longer needed.

The second pressurized air regulating device 314 and the ejector 315 constitute a negative-pressure air supply device. In more detail, the second pressurized air regulating device 314 is equipped with a pressure regulator, and generates negative pressure in a negative-pressure supply path 332 by releasing the pressurized air supplied from the air supply source 70 to the atmosphere via the ejector 315. The negative-pressure supply path 332 is constituted by a flexible pipe, for example. It should be noted that the air supply path and the negative-pressure supply path provided inside each of the main device 310 and the switching device 320 may be configured as flexible pipes or non-flexible pipes, or may be configured as flow paths formed within a block.

It should also be noted that the main device 310 and the air supply source 70 are detachably connected to each other by detachably coupling the first air supply path 333 of the main device 310 to the air supply source 70 via a connecting tool that is not illustrated.

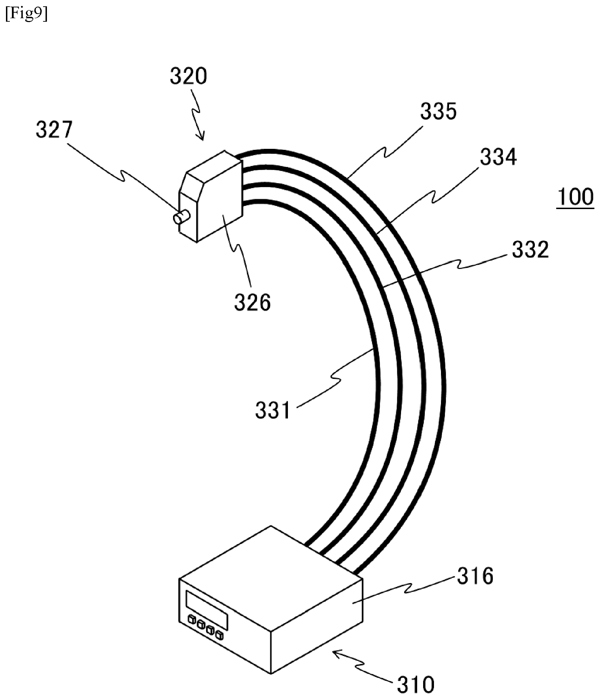

As illustrated in Fig. 9, an operation unit constituted by a touch panel, operation buttons, and the like for setting discharge operations and discharge conditions is disposed on a front side surface of the case 316, and an input/output port (not shown in Fig. 9) for electrical connection to external equipment and an input/output port (not shown in Fig. 9) for connection to an air pipe are disposed on the front side surface or a rear side surface of the case 316.

Since the signal cable 331, the negative-pressure supply path 332, the second air supply path 334, and the pilot pipe 335 which connect the main device 310 to the switching device 320 are all flexible, they do not restrict movement of the main device 310 and the switching device 320 when a relative position of these devices is changed.

The switching device 320 includes the second control device 321, the switching valve 322, the buffer device 323, the exhaust valve 324, a pressure sensor 325, and a case 326.

The second control device 321 is connected via signal cables 336 to 338 to the switching valve 322, the exhaust valve 324, and the pressure sensor 325, and controls operation of these components.

The switching valve 322 is connected on the upstream side to the buffer device 323 by the air supply path 339, and on the downstream side to an output joint 327 by an air supply path 340. The switching valve 322 of the present embodiment example is a three-way valve that can be at a first position where the reservoir container 50 communicates with the buffer device 323 and at a second position where the reservoir container 50 communicates with the negative-pressure supply path 332. The switching valve 322 is a pilot-type solenoid valve, and switches between the first position and the second position using the force of the pilot pressure from the pilot air regulating device 313.

The buffer device 323 is similar to that in the first embodiment example, and is accommodated in the case 326. Since the distance between an outlet port of the buffer device 323 and the upper end of the reservoir container 50 is 200 centimeters or less, it is possible to raise the pressure within the reservoir container 50 quickly in a desired way at the start of discharge. In addition, the adapter tube 60 has the configuration illustrated in Fig. 3, and the air supply path 62 has, for example, a total length of 10 to 200 centimeters, preferably of 20 to 150 centimeters, or more preferably of 30 to 100 centimeters. By ensuring that the length of the air supply path 62 is at least a certain minimum, it is possible to prevent the liquid material from flowing backward through the air supply path 62 to reach the switching valve 322 when negative pressure is generated in the negative-pressure supply path 332 and causing malfunctions.

The exhaust valve 324 is an on-off valve that communicates with the atmosphere. It takes a closed position during the discharge operation to pressurize the upper space of the reservoir container 50, and it takes an open position upon ending the discharge to quickly release the pressurized air in the upper space of the reservoir container 50. By providing the exhaust valve 324, it is also possible to quickly stop the discharge of the liquid material from the discharge port after ending the discharge. The exhaust valve 324 is a pilot-type solenoid valve, and switches between the open position and the closed position using the force of the pilot pressure from the pilot air regulating device 313.

In the present embodiment example, the switching valve 322 and the exhaust valve 324 included in the switching device 320 constitute the discharge valve. The configuration of the discharge valve is not limited to the configuration as illustrated. It may also be configured by combining multiple solenoid valves such as on-off valves or switching valves, or the switching valve and the exhaust valve may be configured as a single valve device such as a multi-way valve or the like, for example.

The pressure sensor 325 measures the pressure value in the air supply path 340 and transmits the value to the second control device 321. The second control device 321 includes a processing device (not shown) and a storage device (not shown) that stores auxiliary control programs. The second control device 321 controls operation of the switching valve 322 and the exhaust valve 324 as necessary based on the measurement values of the pressure sensor 325. In addition, the first control device 311 controls operation of the first pressurized air regulating device 312, the pilot air regulating device 313, and the second pressurized air regulating device 314 as necessary based on the measurement values of the pressure sensor 325 received from the second control device 321. In the present embodiment example, since the pressure sensor 325 is disposed not on the main device 310 but on the switching device 320 which is close to the reservoir container 50, it is possible to measure and control the pressure at a position near the reservoir container, which allows for controlling the pressure of the pressurized air within the reservoir container 50 to be a more appropriate value.

It should be noted that some or all of the functions of the first control device 311 may exist in the second control device 321, and some or all of the functions of the second control device 321 may exist in the first control device.

The second control device 321 can also perform control based on measurement values of sensors other than the pressure sensor. For example, it is possible to implement a temperature control function to control a temperature adjustment device that adjusts the temperature of the reservoir container 50 based on a signal from a temperature sensor installed in the reservoir container 50, as well as a remaining amount detection function to detect the remaining amount of the liquid material in the reservoir container 50 based on a signal from a liquid level detection sensor installed in the reservoir container 50.

The liquid material discharge device 100 of the third embodiment example described above has good responsiveness of air pressure control at the times of starting and ending discharge as the distance between the reservoir container 50 and the buffer device 323 is small.

In addition, since it includes the exhaust valve 324, the pressure inside the reservoir container 50 can be quickly released, which makes it possible to quickly stop the discharge of the liquid material from the discharge port.

Moreover, since negative pressure can be generated in the reservoir container 50 via the negative-pressure supply path 332, an issue of liquid dripping from the discharge port when the discharge is not performed can be solved. It should be noted that, the second pressurized air regulating device 314 and the ejector 315 constitute the negative-pressure air supply device in the present embodiment example, however, the negative-pressure air supply device may be constituted by some other devices as long as it can supply such negative pressure to prevent liquid from dripping from the discharge port when the discharge is not performed.

While the present embodiment example incorporates both exhaust and negative-pressure generation functions, a configuration that incorporates only one of these functions is also possible.

Furthermore, by controlling operation of the various types of valve devices based on the measurement values of the pressure sensor 325, it is possible to measure and control the pressure at a position near the reservoir container, which allows for controlling the pressure of the pressurized air within the reservoir container 50 to be a more appropriate value.

### <<Fourth Embodiment Example>>

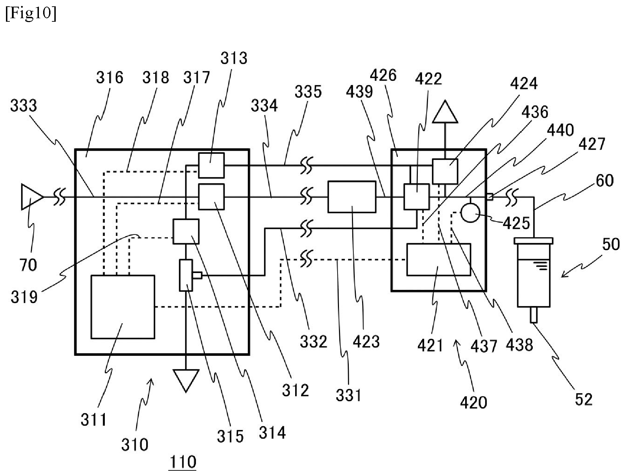

A liquid material discharge device 110 of a fourth embodiment example illustrated in Fig. 10 differs from the liquid material discharge device 100 of the third embodiment example in that a buffer device 423 is not accommodated in a case 426. The following description focuses on the differences from the third embodiment example, and elements in common with the third embodiment example are given the same reference symbols, and their descriptions are omitted.

Since the main device 310 has the same configuration as in the third embodiment example, its description is omitted.

A switching device 420 includes a second control device 421, a switching valve 422, an exhaust valve 424, a pressure sensor 425, and the case 426. In the present embodiment example, the switching valve 422 and the exhaust valve 424 included in the switching device 420 constitute the discharge valve. Since the second control device 421, the switching valve 422, the exhaust valve 424, and the pressure sensor 425 have the same configurations as in the third embodiment example, their descriptions are omitted. It should be noted that the configuration of the discharge valve is not limited to the configuration as illustrated. It may also be configured by combining multiple solenoid valves such as on-off valves or switching valves, or the switching valve and the exhaust valve may be configured as a single valve device such as a multi-way valve or the like, for example. It should also be noted that the air supply path and the negative-pressure supply path provided inside the switching device 420 may be configured as flexible pipes or non-flexible pipes, or may be configured as flow paths formed within a block.

Since the case 426 does not have the buffer device 423 arranged inside thereof, it is configured with a smaller volume than the case 326 of the third embodiment example. Although the buffer device 423 and the case 426 are depicted separately in Fig. 10, the buffer device 423 is attached to the case 426, as in the second embodiment example, by an attachment (attachment tool) or the like that is not illustrated.

An output port of the buffer device 423 is connected to the switching valve 422 via a third air supply path 439. The total length of the third air supply path 439 is 50 centimeters or less, preferably 40 centimeters or less, or more preferably 30 centimeters or less.

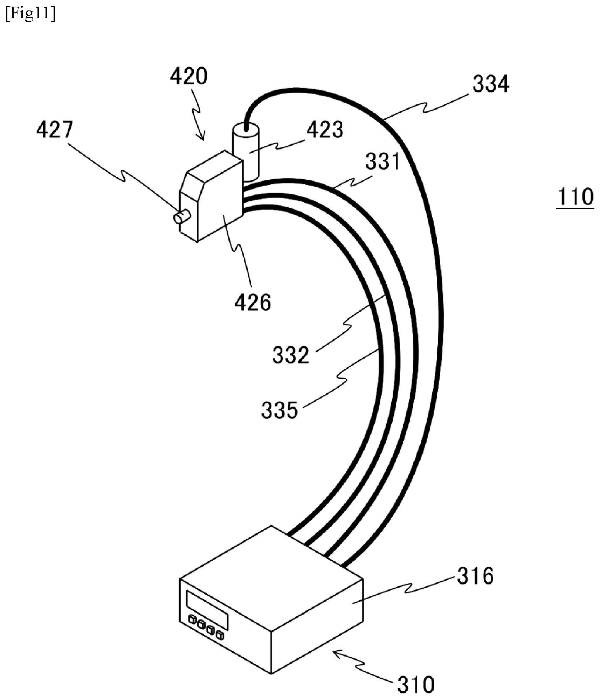

Fig. 11 is a perspective view illustrating the liquid material discharge device 110 of the fourth embodiment example. The switching device 420 has an output joint 427 disposed at a lower part of a front side surface of the case 426, and the buffer device 423 is attached to an upper part of a rear side surface of the case 426. The signal cable 331, the negative-pressure supply path 332, and the pilot pipe 335 are connected to a lower part of the rear side surface of the case 426, and all of these are flexible. The flexible second air supply path 334 is connected to a top surface of the buffer device 423.

The liquid material discharge device 110 of the fourth embodiment example described above also has good responsiveness of air pressure control at the times of starting and ending discharge as the distance between the reservoir container 50 and the buffer device 423 is small.

In addition, as the size of the buffer device 423 is not restricted by the size of the case 426, the buffer device 423 can have large capacity. The buffer device 423 can be constituted by a plurality of tanks and, in this case, some of the tanks may be arranged inside the case 426, and the rest of the tanks may be arranged outside the case 426.

### <<Fifth Embodiment Example>>

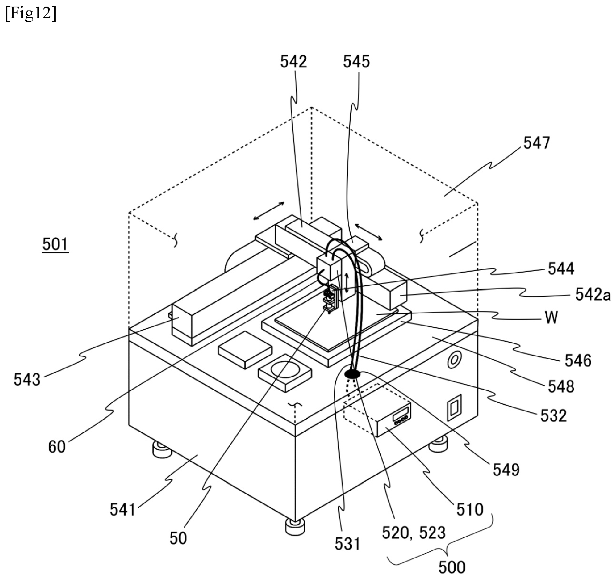

A liquid material discharge device 500 of a fifth embodiment example includes a main device 510 and a switching device 520. The liquid material discharge device 500 of the fifth embodiment example can be mounted on a desktop robot as illustrated in Figs. 4 and 7, while it can also be mounted on a large robot such as the one illustrated in Fig. 12. As illustrated in Fig. 12, an application apparatus 501 on which the liquid material discharge device 500 of the fifth embodiment example is mounted is a floor-installed robot mainly including a base 541, a relative driving device (542 to 544), a movable head 545, a worktable 546, and a cover 547.

The main device 510 of the present embodiment example is arranged inside the base 541 such that an operation unit is exposed. Since the main device 510 has the same configuration as the main device 10 of the first embodiment example, its description is omitted.

The liquid material discharge device 500 of the present embodiment example has the same configuration as that of the first embodiment example from the viewpoint of the block diagram. A case 523 of the fifth embodiment example is rectangular parallelepiped in shape and is arranged on an upper part of a front surface of the movable head 545. The case 523 mounted on the movable head 545 has a signal cable 531 and a second air supply path 532 inserted through its top surface, and the adapter tube 60 attached to its front side surface. A Z-direction driving device 544 and the reservoir container 50 are arranged on a lower part of the front surface of the movable head 45.

The relative driving device is constituted by an X-direction driving device 542, a Y-direction driving device 543, and the Z-direction driving device 544. The X-direction driving device 542 has a beam member 542a that is movable in the Y-direction by the Y-direction driving device 543, and is capable of moving the movable head 545 forward and backward in the X-direction. The Z-direction driving device 544 having a holder on a lower part of its front surface is attached to the movable head 545 attached to the beam member 542a. The operation of the relative driving device is controlled by a robot controller (not shown) arranged inside the base 541. The robot controller is connected to the main device 510 via a signal cable (not shown), and transmits start discharge commands and stop discharge commands to a control device (not shown) included in the main device 510.

If the liquid material discharge device 500 is mounted on a large robot as in the application apparatus 501, the signal cable 531 and the second air supply path 532 included in the liquid material discharge device 500 will be longer than in the first embodiment example. Therefore, if a buffer device is disposed in the main device 510, the responsiveness of air pressure control would even deteriorate. In this regard, as the buffer device is disposed in the switching device 520 in the fifth embodiment example, the responsiveness of air pressure control at the times of starting and ending discharge is good. In addition, both of the signal cable 531 and the second air supply path 532 are flexible and inserted in a movable manner through a cable hole 549 provided on a top surface 548 of the base 541. As such, movement of the movable head 545 is not restricted by the signal cable 531 and the second air supply path 532.

In addition, the signal cable, the air supply path, and the like which connect the main device 510 to the switching device 520 may be configured such that they are attachable to and detachable from each of the main device 510 and the switching device 520, which allows those with various lengths to be attached thereto. In this manner, it will be possible for the main device 510 and the switching device 520 to be mounted on a wider variety of robots because adaptability of the distance therebetween will be enhanced for various distances.

The top surface 548 of the base 541 on which the relative driving device (542 to 544), the worktable 546, and the like are provided is covered by the cover 547 illustrated by dotted lines. It should be noted that a part of the cover 547 is not depicted in Fig. 12 for convenience of explanation. Provision of the cover 547 can prevent dust from adhering to the workpiece W, and prevent accidental contact between an operator and a moving portion of the relative driving device (542 to 544) or the like. It should be noted that the cover 547 may have an openable door for the operator to easily access the inside of the application apparatus.

The liquid material discharge device 500 of the fifth embodiment example described above also has good responsiveness of air pressure control at the times of starting and ending discharge as the distance between the reservoir container 50 and the switching device 520 having the buffer device is small.

Although the main device 510 is arranged inside the base 541 in the example of Fig. 12, the location where the main device 510 is installed is not limited to this, and it can be arranged at any position on or in the application apparatus 501, such as on top of the base 541 or on top of the cover 547. In addition, the position where the switching device 520 is arranged is not limited to the front surface of the movable head 545, and it may be arranged on a top surface or another side surface of the movable head 545. Alternatively, the switching device 520 may be arranged at a position on the beam member 542a where it does not interfere with the application work. Naturally, it is also possible to mount any one of the liquid material discharge devices illustrated in the first to fourth embodiment examples on a large robot such as the one illustrated in Fig. 12, instead of mounting the liquid material discharge device 500.

The preferred embodiment examples and variations of the present invention have been described above. However, the technical scope of the present invention is not limited to the descriptions of the above-described embodiments. Various alterations and modifications can be applied to the above-described embodiment examples, and such altered or modified modes also fall within the technical scope of the present invention.

For example, the present invention is also applicable to a type of robots in which a head holding a reservoir container that communicates with a nozzle is fixed, and only a workpiece is moved relative to the nozzle by a relative driving device.

### List of Reference Symbols

1: liquid material discharge device (first embodiment example) / 10, 210, 310, 510: main device / 11, 211: control device / 12: pressurized air regulating device / 13, 316: case / 14, 333: first air supply path / 20, 120, 220, 320, 420, 520: switching device / 21, 121: discharge valve / 22, 122, 323, 423: buffer device / 23, 123, 326, 426, 523: case / 24, 124, 327: output joint / 31, 131, 231, 531: signal cable / 32, 132, 232, 334, 532: second air supply path / 33: third air supply path / 34: fourth air supply path / 35, 135: signal cable / 40: application apparatus (first embodiment example) / 41: base / 42: X-direction driving device / 43: Y-direction driving device / 44: Z-direction driving device / 45: movable head / 46: worktable / 50: reservoir container / 60: adapter tube / 61: adapter / 62: air supply path / 63: joint coupling tool / 70: air supply source / 81: X direction / 82: Y direction / 83: Z direction / 90: liquid material discharge device (second embodiment example) / 91: application apparatus (second embodiment example) / 100: liquid material discharge device (third embodiment example) / 110: liquid material discharge device (fourth embodiment example) / 311: first control device / 312: first pressurized air regulating device / 313: pilot air regulating device / 314: second pressurized air regulating device / 321: second control device / 322, 422: switching valve / 324, 424: exhaust valve / 332: negative-pressure supply path / 335: pilot pipe / 500: liquid material discharge device (fifth embodiment example) / 501: application apparatus (fifth embodiment example)

## Claims

1. A liquid material discharge device comprising:
a main device connected to an air supply source;
a switching device configured to be physically separate from the main device and to supply air into a reservoir container that communicates with a nozzle; and
a buffer device,
wherein the main device includes a pressurized air regulating device configured to adjust pressurized air supplied from the air supply source to a desired pressure, and a control device,
the switching device includes a discharge valve configured to switch between allowing and blocking communication through a flow path connecting the pressurized air regulating device to the reservoir container,
the main device is connected to the switching device by an at least partially flexible air supply path so that a relative position of the main device and the switching device can be changed, and
the buffer device is arranged in the switching device or arranged such that the buffer device is coupled directly or indirectly to the switching device.

2. The liquid material discharge device according to Claim 1, wherein a total length of a flow path connecting the discharge valve to the buffer device is equal to or smaller than 50 centimeters.

3. The liquid material discharge device according to Claim 1, further comprising a coupling tool or an attachment for attaching the switching device to a robot configured to move the reservoir container relative to a workpiece.

4. The liquid material discharge device according to Claim 1, wherein the switching device includes a case that accommodates the discharge valve, and
the buffer device includes a container disposed inside the case of the switching device.

5. The liquid material discharge device according to Claim 1, wherein the switching device includes a case that accommodates the discharge valve, and
the buffer device includes a container disposed outside the case of the switching device.

6. The liquid material discharge device according to Claim 5, comprising a coupling tool or an attachment for attaching the buffer device to the case.

7. The liquid material discharge device according to Claim 1, wherein the switching device includes an output joint fluidly connected to the discharge valve, the output joint being configured to be coupled to an air supply tube to which the reservoir container is coupled.

8. The liquid material discharge device according to Claim 1, wherein the pressurized air regulating device includes a pressure regulator.

9. The liquid material discharge device according to Claim 1, wherein the discharge valve includes at least one pilot-type valve.

10. The liquid material discharge device according to Claim 9, wherein the main device includes a pilot air regulating device configured to supply pilot pressure to the pilot-type valve.

11. The liquid material discharge device according to Claim 10, wherein the pilot air regulating device includes a pressure regulator.

12. The liquid material discharge device according to Claim 1, wherein the discharge valve is constituted by a multi-way valve.

13. The liquid material discharge device according to Claim 1, wherein the discharge valve is constituted by a plurality of solenoid valves.

14. The liquid material discharge device according to Claim 1, comprising a pressure sensor disposed in a flow path that connects the reservoir container to the discharge valve,
wherein the control device is configured to control the discharge valve based on a measurement value of the pressure sensor.

15. The liquid material discharge device according to Claim 1, wherein the discharge valve is configured to switch between allowing communication between the pressurized air regulating device and the reservoir container and allowing communication between atmosphere and the reservoir container.

16. The liquid material discharge device according to any one of Claims 1 to 15, wherein the main device includes a negative-pressure air supply device configured to supply negative pressure,
the negative-pressure air supply device is connected to the discharge valve by an at least partially flexible negative-pressure air supply path, and
the discharge valve is configured to switch between allowing communication between the pressurized air regulating device and the reservoir container and allowing communication between the negative-pressure air supply device and the reservoir container.

17. The liquid material discharge device according to Claim 16, wherein the negative-pressure air supply device includes an ejector.

18. The liquid material discharge device according to Claim 17, wherein the negative-pressure air supply device includes a pressure regulator disposed between the ejector and the air supply source.

19. An application apparatus comprising:
the liquid material discharge device according to any one of Claims 1 to 15;
a robot that has a holder to hold the reservoir container and is configured to move the holder and an application target relative to each other; and
a flexible air supply tube that connects the liquid material discharge device to the reservoir container.

20. The application apparatus according to Claim 19, further comprising a coupling tool or an attachment for attaching the switching device to the robot.

21. The application apparatus according to Claim 20, wherein the coupling tool or the attachment is a coupling tool or an attachment for attaching the switching device to a movable head that has the holder.

22. The application apparatus according to Claim 20, wherein the robot includes a beam member on which a movable head that has the holder is mounted, and
the coupling tool or the attachment is a coupling tool or an attachment for attaching the switching device to the beam member.
